# EUROPÄISCHE PATENTSCHRIFT

(11) **EP 2 524 333 B1**
(45) Veröffentlichungstag und Bekanntmachung des Hinweises auf die Patenterteilung: **12.11.2014**
(21) Anmeldenummer: 11700725.2
(22) Anmeldetag: 11.01.2011
(51) Int. Cl.: G06F 21/53, G06F 21/54, G06F 21/57

(54) **VERFAHREN ZUM BEREITSTELLEN EINES SICHEREN ZÄHLERS AUF EINEM ENDGERÄT**
METHOD FOR PROVIDING A SECURE COUNTER ON A TERMINAL
PROCÉDÉ POUR PERMETTRE D'OBTENIR UN COMPTEUR FIABLE SUR UN APPAREIL TERMINAL

(30) Priorität: 13.01.2010 DE 102010004446
(43) Veröffentlichungstag der Anmeldung: 21.11.2012
(73) Patentinhaber: Giesecke & Devrient GmbH, 81677 München (DE)
(72) Erfinder: SPITZ, Stephan, 85757 Karlsfeld (DE); STERZINGER, Hermann, 85598 Baldham (DE)
(86) Internationale Anmeldenummer: PCT/EP2011/000078
(87) Internationale Veröffentlichungsnummer: WO 2011/085960

(56) Entgegenhaltungen:
- EP-A2- 1 282 028
- WO-A1-98/19237
- WO-A2-01/75595
- WO-A2-2004/046934
- WO-A2-2009/027743
- US-A1- 2006 256 106

## Beschreibung

Die Erfindung betrifft ein Verfahren zum Bereitstellen eines sicheren Zählers auf einem Endgerät, das zumindest ein Sicherheitselement und eine Ausführungsumgebung für die Ausführung einer oder mehrerer sicherheitsrelevanter Applikationen umfasst, wobei der durch die eine oder die mehreren sicherheitsrelevanten Applikationen verarbeitete Zähler in dem zumindest einen Sicherheitselement vorgehalten wird. Die Erfindung betrifft ferner ein Endgerät, das zumindest ein Sicherheitselement und eine Ausführungsumgebung für die Ausführung einer oder mehrerer sicherheitsrelevanter Applikationen umfasst, wobei der durch die eine oder die mehreren sicherheitsrelevanten Applikationen verarbeitete Zähler in dem zumindest einen Sicherheitselement vorgehalten ist.

Sichere Zähler werden in einer Vielzahl von Anwendungen benötigt. Beispielsweise werden sichere Zähler bei der Ausführung von Transaktionen verwendet, um Fehlversuche bei der Eingabe eines Identifikationsdaturns, wie z.B. einer persönlichen Identifikationsnummer, festzustellen. Der Zähler stellt hier einen sog. Fehlbedienungszähler dar. Insbesondere bei sicherheitskritischen Daten und Prozessen muss in jedem Falle sichergestellt werden können, dass der Zähler nicht manipuliert werden kann.

Zur Erhöhung der Sicherheit von Applikationen in einem Endgerät sind Endgeräte bekannt, welche eine normale Ausführungsumgebung und eine gesicherte Ausführungsumgebung aufweisen. Ein solches Endgerät ist beispielsweise in der WO 2004/046934 A2 beschrieben. Das in WO 2009/027743 A2 offenbarte Endgerät umfasst weiterhin einen Schnittstellencontroller, welcher den Zugang zu den von einem Sicherheitselement (SIM-Karte) angebotenen Diensten absichern soll.

Die Realisierung eines sicheren Zählers in dem gesicherten Bereich des Endgeräts ist jedoch problematisch. Ein Zähler kann immer wieder durch das Einspielen eines früheren bzw. älteren Speicherabbilds des gesicherten Bereichs mit einem alten Wert überschrieben werden. Zwar kann die Integrität eines jeden Speicherabbilds in einer solchen Sicherheitsumgebung gewährleistet werden, allerdings unabhängig von einem bestimmten Zeitpunkt. Hierdurch ergibt sich folgender möglicher Angriff: In einem ersten Schritt wird ein gültiges Speicherabbild mit einem Fehlbedienungszähler aus dem nicht-flüchtigen Speicher des Endgeräts kopiert. Anschließend wird versucht, über eine Eingabevorrichtung eine Transaktion (z.B. eine Bezahlung) zu autorisieren. Dies kann beispielsweise durch die Eingabe einer persönlichen Identifikationsnummer oder einen Fingerabdruck erfolgen. Konnte die Transaktion nicht legitimiert werden, so kann in einem letzten Schritt der aktuelle Inhalt des nicht-flüchtigen Speichers mit dem "alten" Speicherabbild überspielt werden, wodurch ein neuer Versuch zur Autorisierung der Transaktion ermöglicht wird.

Aus der WO 2007/085987 A1 ist ein Verfahren bekannt, um Aktualisierungen einer Firmware eines elektronischen Geräts nachverfolgen zu können. Nach einer Aktualisierungsoperation wird ein manipulationssicherer Indikator für die Erfassung von die Aktualisierung betreffenden Parametern gesetzt. Hierzu werden Schmelzsicherungen (sog. Fuses) eingesetzt.

In US 2006/0256106 A1 werden virtuelle TPM-Module in nebengeordneten virtuellen Maschinen durch ein physisches TPM-Modul abgesichert. WO 2009/027743 A2 offenbart den Oberbegriff von Anspruch 1.

Es ist Aufgabe der vorliegenden Erfindung, ein Verfahren anzugeben, mit dem ein sicherer Zähler auf einem Endgerät manipulationsgeschützt bereitgestellt werden kann. Eine weitere Aufgabe besteht darin, ein Endgerät anzugeben, welches einen gegen Manipulation geschützten, sicheren Zähler aufweist.

Diese Aufgaben werden gelöst durch ein Verfahren gemäß den Merkmalen des Patentanspruchs 1 und ein Endgerät gemäß den Merkmalen des Patentanspruchs 11. Vorteilhafte Ausgestaltungen ergeben sich aus den abhängigen Patentansprüchen.

Die Erfindung schafft ein Verfahren auf einem Endgerät, das zumindest ein Sicherheitselement und eine erste sichere Ausführungsumgebung für die Ausführung sicherheitsrelevanter Applikationen und eine zweite unsichere Ausführungsumgebung umfasst. Das Verfahren umfasst den Schritt des Ausführens einer sicherheitsrelevanten Applikation in der sicheren Ausführungsumgebung, wobei die Applikation eine Variable verwendet und nicht-flüchtig speichert. Als weiterer Schritt ist das Verwenden einer dedizierten Schnittstelle der sicheren Ausführungsumgebung vorgesehen, welche für sicherheitsrelevante Applikationen zum Auslagern von Variablen auf das Sicherheitselement vorgesehen ist, um die Variable durch die sicherheitsrelevante Applikation in dem zumindest einen Sicherheitselement zu speichern.

Die Variable ist eine Variable eine Variable zur Absicherung der sicherheitsrelevanten Applikation. Insbesondere wird anhand der Variablen das Einspielen eines alten Speicher-Abbilds mit veraltetem Variableninhalt verhindert. Hierdurch kann die Sicherheit gegenüber Manipulation erhöht werden. In einer besonders zweckmäßigen Ausgestaltung ist die Variable ein Zähler.

Die Variable wird vorzugsweise in einem der sicheren Ausführungsumgebung zugeordneten Speicherbereich des Sicherheitselements gespeichert, welcher im Folgenden teilweise auch als Auslagerungsspeicherbereich bezeichnet wird. Dieser Bereich ist für die Auslagerung von Variablen unterschiedlicher Applikationen vorgesehen. Der Auslagerungsspeicherbereich ist so ausgelegt, dass ein Zugriff nur durch die sichere Ausführungsumgebung möglich ist. Applikationen aus dem sicheren Bereich haben keine eigenen Zugriffsrechte auf den Auslagerungsspeicherbereich. Eine Applikation benötigt für die Auslagerung somit keinen eigenen Speicherbereich auf dem Sicherheitselement. Sollte eine Applikation bereits einen eigenen Speicherbereich auf dem Sicherheitselement haben, erfolgt die Auslagerung der Variable dennoch in den für mehrere Applikationen vorgesehenen Auslagerungsspeicherbereich. Die gesicherte Umgebung ordnet einer Applikation, die eine Variable auslagern möchte, einen Speicherplatz für die Variable innerhalb des Auslagerungsspeicherbereichs zu und speichert die Variable dort für die Applikation. Der Auslagerungsspeicherbereich kann auf dem Sicherheitselement unterschiedlich implementiert werden, er kann beispielsweise ein Teil eines JAVA Card Applets sein. Er kann aber beispielsweise auch auf dem Sicherheitselement in einem separaten Verzeichnis Auslagerungs-DF (Dedicated File) mit entsprechenden Dateien (z.B. Auslagerungs-EF (Elementary File) und EF_Key mit den für die Auslagerung verwendeten Schlüsseln des gesicherten Bereiches) angeordnet sein. Die zumeist standardisierte Architektur von Applikationsdiensten auf dem Sicherheitselement muss für die Auslagerung somit nicht angepasst werden.

Gemäß einer weiteren Ausgestaltung wird die durch zumindest eine der mehreren sicherheitsrelevanten Applikationen verarbeitete Variable in dem zumindest einen Sicherheitselement vorgehalten, wobei für einen Zugriff auf die Variable eine sichere Verbindung zwischen der die Variable anfordernden Applikation und dem Sicherheitselement aufgebaut wird.

Bei dem erfindungsgemäßen Verfahren wird die Variable einerseits dadurch geschützt, dass diese auf ein externes, gekapseltes Sicherheitselement, wie z.B. eine Secure Mikro-SD-Karte, eine SIM (Subscriber Identity Module)-Karte, eine UICC (Universal Integrated Chip Card) oder einen sog. Hardware-Chip ausgelagert wird. Andererseits erfolgt ein Zugriff auf die Variable ausschließlich über eine sichere Verbindung zwischen der die Variable anfordernden Applikation und dem Sicherheitselement. Hierdurch wird ein Schutz vor Manipulation der Variablen erreicht, da durch ein Speicherabbild der Ausführungsumgebung, welche die die Variable verwendende sicherheitsrelevante Applikation umfasst, nicht der aktuell gültige Variablenwert erfassbar ist, da dieser in dem Sicherheitselement geführt wird. Dadurch läuft der eingangs beschriebene Angriff, z.B. einen Fehlbedienungszähler durch ein Speicherabbild wiederholt zurückzusetzen, ins Leere, da ein Rücksetzen der Variablen über das Speicherabbild nicht möglich ist.

Zweckmäßigerweise werden die eine oder die mehreren Applikationen in einer gesicherten Ausführungsumgebung des Endgeräts ausgeführt, so dass auch die sicherheitsrelevanten Applikationen vor Manipulation geschützt sind.

Es ist insbesondere zweckmäßig, wenn für unterschiedliche sicherheitsrelevante Applikationen unterschiedliche Variablen in dem Sicherheitselement bereitgestellt werden. Hierdurch kann eine Variable mehreren Applikationen auf dem Endgerät zur Verfügung gestellt werden. In diesem Zusammenhang ist es vorteilhaft, wenn für eine jeweilige sicherheitsrelevante Applikation eine eigene Variable in dem Sicherheitselement bereitgestellt wird. Dies hat zur Folge, dass eine Variable einer ersten Applikation nicht von einer zweiten Applikation, und umgekehrt, benutzt werden kann.

Gemäß einer weiteren zweckmäßigen Ausgestaltung wird die Variable durch eine weitere Applikation des Sicherheitselements verwaltet, wobei die weitere Applikation und die eine oder die mehreren Applikationen in einer kryptographischen Beziehung zueinander stehen. Zum Beispiel kann im Rahmen einer Challenge-Response-Authentisierung ein symmetrischer Schlüssel zwischen der weiteren Applikation und der oder den Applikationen ausgetauscht werden.

Gemäß einer weiteren zweckmäßigen Ausgestaltung wird die sichere Verbindung zu dem Sicherheitselement durch eine Programmierschnittstelle hergestellt, die der oder den sicherheitsrelevanten Applikationen zwecks Anforderung eines Zugriffs auf die Variable zugeordnet ist. Eine solche Programmierschnittstelle wird als Application Programmable Interface (API) bezeichnet, welche im vorliegenden Fall dem einzigen Zweck dient, einer Applikation den Zugriff auf die in dem Sicherheitselement angeordnete Variable zu ermöglichen. Insbesondere kann die Programmierschnittstelle für eine jeweilige sicherheitsrelevante Applikation eine jeweilige sichere Verbindung zu dem Sicherheitselement und damit zu einer nur durch die jeweilige Applikation genutzten Variablen herstellen. Hierdurch wird eine Isolierung ermöglicht, mit der jeweilige Variablen einzelnen Applikationen auf dem Endgerät zur Verfügung gestellt werden können. Zweckmäßigerweise verwaltet die Programmierschnittstelle hierbei einen jeweiligen Kontext.

Es ist weiterhin vorgesehen, dass die Programmierschnittstelle über die in dem Sicherheitselement vorhandene Variable durch das Sicherheitselement benachrichtigt wird.

Eine weitere Ausgestaltung sieht vor, dass die Variable aus dem Sicherheitselement gelesen und durch eine der Applikationen verarbeitet wird. Alternativ wird die, insbesondere für eine Absicherung einer Transaktion verwendete, Variable beim Auslesen aus dem Sicherheitselement durch das Sicherheitselement verändert, insbesondere inkrementiert oder dekrementiert. Hierdurch kann die Sicherheit gegenüber Manipulation der Variablen weiter verbessert werden, da unmittelbar mit dem Auslesen der Variablen deren Veränderung in dem Sicherheitselement durch das Sicherheitselement vorgenommen wird. Die Verwendung eines Speicherabbilds zu einem beliebigen Zeitpunkt weist daher zu späteren Zeitpunkten niemals den aktuell gültigen Variablenwert auf.

Es ist weiterhin vorteilhaft, wenn die Variable zusätzlich verschlüsselt in der gesicherten Ausführungsumgebung gespeichert wird. Hierdurch wird eine Backup-Funktionalität bereitgestellt. Der Schlüssel zum Entschlüsseln der Variablen ist dabei lediglich dem Sicherheitselement bekannt. Wird der Schlüssel einer Mehrzahl an Sicherheitselementen bekannt gemacht, so kann bei einem Austausch des Sicherheitselements die Variable dennoch weiter verwendet werden.

Die Erfindung schafft weiter ein Endgerät, das zumindest ein Sicherheitselement und eine erste sichere Ausführungsumgebung für die Ausführung sicherheitsrelevanter Applikationen und eine zweite unsichere Ausführungsumgebung umfasst. Das Endgerät ist dazu ausgebildet, eine sicherheitsrelevante Applikation in der sicheren Ausführungsumgebung auszuführen, wobei durch die Applikation eine Variable verwendbar und nichtflüchtig speicherbar ist. Das Endgerät ist weiter dazu ausgebildet, eine dedizierte Schnittstelle der sicheren Ausführungsumgebung zu verwenden, welche für sicherheitsrelevante Applikationen zum Auslagern von Variablen auf das Sicherheitselement vorgesehen ist, um die Variable durch die sicherheitsrelevante Applikation in dem zumindest einen Sicherheitselement zu speichern.

Das erfindungsgemäße Endgerät weist die gleichen Vorteile auf, die vorstehend in Verbindung mit dem erfindungsgemäßen Verfahren erläutert wurden.

In einer zweckmäßigen Ausgestaltung ist die durch die sicherheitsrelevanten Applikationen verarbeitete Variable in dem zumindest einen Sicherheitselement vorgehalten. Die Ausführungsumgebung ist dazu ausgebildet, für einen Zugriff auf den Zähler eine sichere Verbindung zwischen der den Zähler anfordernden Applikation und dem Sicherheitselement aufzubauen.

In einer weiteren zweckmäßigen Ausgestaltung sind die eine oder die mehreren sicherheitsrelevanten Applikationen in einer gesicherten Ausführungsumgebung des Endgeräts ausführbar. Ferner umfasst dieses eine normale Ausführungsumgebung für die Ausführung nicht-sicherheitsrelevanter Applikationen.

Gemäß einer weiteren Ausgestaltung umfasst das Sicherheitselement zur Verwaltung der Variablen eine weitere Applikation, wobei die weitere Applikation und die eine oder die mehreren Applikationen in einer kryptographischen Beziehung zueinander stehen. Hierdurch kann die sichere Übertragung des Zählers an die diesen verwendende Applikation sichergestellt werden. Die Gefahr einer Manipulation ist weiter verringert.

Es ist weiterhin vorgesehen, dass der oder den sicherheitsrelevanten Applikationen zwecks Anforderung eines Zugriffs auf die Variable eine Programmierschnittstelle zugeordnet ist, die die sichere Verbindung zu dem Sicherheitselement herstellen kann.

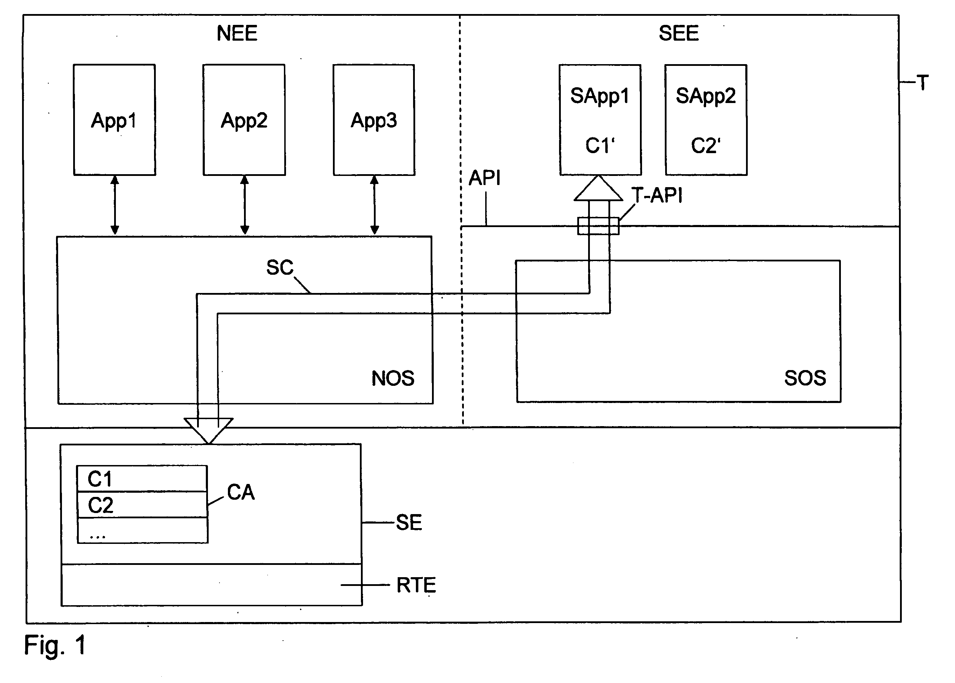

Die Erfindung wird nachfolgend näher anhand eines Ausführungsbeispiels in der Zeichnung erläutert.

Die einzige Figur zeigt in einer schematischen Darstellung ein beispielhaftes erfindungsgemäßes Endgerät.

Das Endgerät T umfasst eine normale oder Haupt-Ausführungsumgebung NEE mit einem Haupt-Betriebssystem NOS und einer Anzahl an nichtsicherheitsrelevanten Applikationen App1, App2, App3. Die Haupt-Ausführungsumgebung NEE entspricht der Ausführungsumgebung eines herkömmlichen Mobilfunkendgeräts. Das Endgerät T umfasst weiterhin einen gesicherten Bereich mit einer gesicherten Ausführungsumgebung SEE (sog. Trusted Area), in welcher ein sicheres Betriebssystem SOS implementiert ist. In der gesicherten Ausführungsumgebung SEE laufen sicherheitsrelevante Applikationen SApp1, SApp2 ab. Als sicheres Betriebssystem wird beispielweise MobiCore4 verwendet. Die sicherheitsrelevanten Applikationen werden auch als sog. Trustlets bezeichnet. Darüber hinaus umfasst das Endgerät T ein Sicherheitselement SE, z.B. in Gestalt einer Secure Mikro-SD-Karte, einer SIM-Karte, einer UICC oder einem Hardware-Chip.

Um die Sicherheit eines durch eine der sicherheitsrelevanten Applikationen SApp1, SApp2 benutzten Zählers vor Manipulation zu erhöhen, umfasst das Sicherheitselement SE neben einer Laufzeitumgebung RTE (z.B. der Java Runtime-Laufzeitumgebung) eine Zählerapplikation CA, welche zumindest einen Zähler C1, C2 verwaltet. Benötigt eine der sicherheitsrelevanten Applikationen SApp1, SApp2 einen sicheren Zähler, so wird dieser durch das Sicherheitselement SE bereitgestellt.

Um eine Manipulation des sicheren Zählers durch ein Ersetzen des Sicherheitselements SE zu verhindern, ist eine kryptographische Beziehung zwischen dem Sicherheitselement SE und den sicherheitsrelevanten Applikationen SApp1, SApp2 vorgesehen. Hierbei können sog. Secure Channel-Protokolle zum Einsatz kommen.

Die Kommunikation zwischen einer jeweiligen sicherheitsrelevanten Applikation und dem Sicherheitselement erfolgt über eine sichere Verbindung SC (sog. Secure Channel). Die Kommunikation zwischen einer der sicherheitsrelevanten Applikationen SApp1, SApp2 und dem Sicherheitselement SE findet hierbei nach Art einer TrustZone-Kommunikation unter optionaler Zwischenschaltung der Haupt-Ausführungsumgebung NEE statt, wie dies in der Figur dargestellt ist.

Die Funktionsweise des erfindungsgemäßen Endgeräts ist wie folgt:
Zur Initialisierung erfolgt in einem ersten Schritt die Herstellung der kryptographischen Verbindung zwischen dem Sicherheitselement SE und der einen Zähler benötigenden sicherheitsrelevanten Applikationen SApp1, SApp2. Die kryptographische Beziehung kann beispielsweise durch den Austausch eines symmetrischen Schlüssels im Rahmen einer Challenge-Response-Authentisierung erfolgen. In einem nächsten Schritt erfolgt das Anlegen von sicheren Zählern C1, C2 in der Zählerapplikation CA (z.B. einem Java Card Applet). Nach dem Anlegen wird eine für die zählerspezifische Programmierschnittstelle T-API (z.B. Secure Counter API einer Applikationsprogrammierschnittstelle API (Trustlet API)) informiert, dass ein gemeinsamer oder ein jeweiliger Zähler für die sicherheitsrelevanten Applikationen bereitstehen.

Benötigt eine der sicherheitsrelevanten Applikationen SApp1, SApp2 einen sicheren Zähler C1, C2, so fordert die Applikation diesen über die Programmierschnittstelle T-API an. Hierzu kann beispielsweise das Kommando INIT(Zähler x) verwendet werden. Die Programmierschnittstelle T-API baut - gegebenenfalls über die Haupt-Ausführungsumgebung NEE - eine sichere Verbindung CA zu dem Sicherheitselement SE, d.h. der Zählerapplikation CA, auf und informiert hierüber die den Zähler anfordernde Applikation SApp1, SApp2. Dies kann beispielsweise mit dem Kommando INIT() = OK erfolgen. Nun steht der Zähler C1, C2 für die diesen anfordernde sicherheitsrelevante Applikation SApp1, SApp2 zur Verfügung. Der Zähler C1, C2 kann nun gelesen und in der Applikation weiter verwendet werden. Das Auslesen kann beispielsweise durch das Kommando READ(Zähler x) erfolgen. Ebenso kann der Zähler aus Sicherheitsgründen gleich beim Zugriff auf das Sicherheitselement SE erhöht werden, z.B. über das Kommando INC(Zähler x), mit dem der Zähler um einen Wert erhöht wird. Diese Vorgehensweise bietet sich insbesondere für die Absicherung einer Transaktion an.

Prinzipiell kann ein gemeinsamer Zähler für sämtliche sicherheitsrelevante Applikationen bereitgestellt werden. Ebenso ist es möglich, einen jeweiligen Zähler C1, C2 einzelnen sicherheitsrelevanten Applikationen SApp1, SApp2 ausschließlich zur Verfügung zu stellen. Beispielsweise wird der Zähler C1 der sicherheitsrelevanten Applikation SApp1 und der Zähler C2 der sicherheitsrelevanten Applikation SApp2 zur Verfügung gestellt. Die Zähler können jeweils nur durch die ihr zugeordnete Applikation ausgelesen werden. Im Falle einer derartigen Isolierung ist vorgesehen, dass die Programmier-Schnittstelle T-API einen Kontext verwaltet und gegebenenfalls eine eigene sichere Verbindung für jede der Applikation verwendet.

Prinzipiell erlaubt es die Erfindung, beliebig viele Zähler in das Sicherheitselement auszulagern, wobei insbesondere ein jeweiliger Zähler einer jeweiligen Applikation zugeordnet sein kann.

Die sicherheitsrelevanten Applikationen sind in einem Speicher der gesicherten Ausführungsumgebung (sog. MobiCore-Image) integritätsgesichert gespeichert und werden bei einem Start des Endgeräts T geladen. Applikationen, die einen sicheren Zähler verwenden, weisen dabei eine Verbindung über die Programmierschnittstelle T-API zu dem Sicherheitselement SE auf.

Um den Austausch eines Sicherheitselements zu ermöglichen, ohne die gesicherte Ausführungsumgebung zu blockieren, ist aus Backup-Gründen vorgesehen, den Zähler C1, C2 verschlüsselt zusätzlich in dem Speicher der gesicherten Laufzeitumgebung abzulegen. Diese sind in der Figur mit C1' und C2' gekennzeichnet. Der Schlüssel hierzu kann einem oder mehreren Sicherheitselementen SE bekannt sein. Sicherheitselemente, die den entsprechenden Schlüssel aufweisen, können dann den verschlüsselten Zähler aus dem Speicher der gesicherten Ausführungsumgebung laden und in der beschriebenen Weise bereithalten.

Weiterhin können sog. Fuses verwendet werden, die mit einem Zähler auf dem Sicherheitselement SE kombiniert werden, um die Möglichkeit zu schaffen, ältere Versionen der gesicherten Ausführungsumgebung in das Endgerät einzuspielen.

## Patentansprüche

1. Verfahren auf einem Endgerät (T), das zumindest ein Sicherheitselement (SE) und eine erste sichere Ausführungsumgebung für die Ausführung sicherheitsrelevanter Applikationen (SApp1, SApp2) und eine zweite unsichere Ausführungsumgebung für die Ausführung nicht-sicherheitsrelevanter Applikationen (App1, App2, App3) umfasst, mit den Schritten:
Ausführen einer sicherheitsrelevanten Applikation (SApp1, SApp2) in der sicheren Ausführungsumgebung, wobei die Applikation (SApp1, SApp2) eine Variable (C1,C2) verwendet und nicht-flüchtig speichert,
**gekennzeichnet durch**
Verwenden einer dedizierten Schnittstelle der sicheren Ausführungsumgebung, welche für sicherheitsrelevante Applikationen zum Auslagern von Variablen auf das Sicherheitselement vorgesehen ist, um die Variable **durch** die sicherheitsrelevante Applikation (SApp1, SApp2) in dem zumindest einen Sicherheitselement (SE) zu speichern,
wobei die Variable (C1, C2) eine Variable zur Absicherung der sicherheitsrelevanten Applikation (SApp1, SApp2) ist.

2. Verfahren nach Anspruch 1, **dadurch gekennzeichnet, dass** anhand der Variablen (C1, C2) das Einspielen eines alten Speicherabbildes mit einem veralteten Variableninhalt verhindert wird.

3. Verfahren nach einem der Ansprüche 1 bis 2, **dadurch gekennzeichnet, dass** die Variable (C1, C2) in einen dedizierten Auslagerungsspeicherbereich des Sicherheitselements gespeichert wird.

4. Verfahren nach einem der vorhergehenden Ansprüche, **dadurch gekennzeichnet, dass** die durch die sicherheitsrelevanten Applikationen (SApp1, SApp2) verarbeitete Variable (C1, C2) in dem zumindest einen Sicherheitselement (SE) vorgehalten wird, wobei für einen Zugriff auf die Variable (C1, C2) eine sichere Verbindung zwischen der die Variable (C1, C2) anfordernden Applikation (SApp1, SApp2) und dem Sicherheitselement (SE) aufgebaut wird.

5. Verfahren nach einem der vorhergehenden Ansprüche, **dadurch gekennzeichnet, dass** für unterschiedliche sicherheitsrelevante Applikationen (SApp1, SApp2) unterschiedliche Variablen (C1, C2) in dem Sicherheitselement (SE) bereitgestellt werden.

6. Verfahren nach Anspruch 5, **dadurch gekennzeichnet, dass** für eine jeweilige sicherheitsrelevante Applikationen (SApp1, SApp2) eine eigene Variable (C1, C2) in dem Sicherheitselement (SE) bereitgestellt wird.

7. Verfahren nach einem der vorhergehenden Ansprüche, **dadurch gekennzeichnet, dass** die Variable (C1, C2) durch eine weitere Applikation (CA) des Sicherheitselements (SE) verwaltet wird, wobei die weitere Applikation (CA) und die eine oder die mehreren Applikationen (SApp1, SApp2) in einer kryptographischen Beziehung zueinander stehen.

8. Verfahren nach einem der vorhergehenden Ansprüche, **dadurch gekennzeichnet, dass** die sichere Verbindung zu dem Sicherheitselement (SE) durch eine Programmierschnittstelle (T-API) hergestellt wird, die der oder den sicherheitsrelevanten Applikationen (SApp1, SApp2) zwecks Anforderung eines Zugriffs auf die Variable (C1, C2) zugeordnet ist.

9. Verfahren nach einem der Ansprüche 6 und 8, **dadurch gekennzeichnet, dass** die Programmierschnittstelle (T-API) für eine jeweilige sicherheitsrelevante Applikation (SApp1, SApp2) eine jeweilige sichere Verbindung zu dem Sicherheitselement (SE) herstellt.

10. Verfahren nach Anspruch 8 oder 9, **dadurch gekennzeichnet, dass** die Programmierschnittstelle (T-API1, T-API2) über die in dem Sicherheitselement (SE) vorhandene Variable (C1, C2) durch das Sicherheitselement (SE) benachrichtigt wird.

11. Endgerät (T), das zumindest ein Sicherheitselement (SE) und eine erste sichere Ausführungsumgebung für die Ausführung sicherheitsrelevanter Applikationen (SApp1, SApp2) und eine zweite unsichere Ausführungsumgebung für die Ausführung nicht-sicherheitsrelevanter Applikationen (App1, App2, App3) umfasst, wobei das Endgerät (T) dazu ausgebildet ist, eine sicherheitsrelevante Applikation (SApp1, SApp2) in der sicheren Ausführungsumgebung auszuführen, wobei durch die Applikation (SApp1, SApp2) eine Variable verwendbar und nicht-flüchtig speicherbar ist,
**dadurch gekennzeichnet, dass**
das Endgerät (T) weiter dazu ausgebildet ist, eine dedizierte Schnittstelle der sicheren Ausführungsumgebung zu verwenden, welche für sicherheitsrelevante Applikationen zum Auslagern von Variablen auf das Sicherheitselement vorgesehen ist, um die Variable durch die sicherheitsrelevante Applikation (SApp1, SApp2) in dem zumindest einen Sicherheitselement (SE) zu speichern,
wobei die Variable (C1, C2) eine Variable zur Absicherung der sicherheitsrelevanten Applikation (SApp1, SApp2) ist.

12. Endgerät nach Anspruch 11, **dadurch gekennzeichnet, dass** die durch die sicherheitsrelevanten Applikationen (SApp1, SApp2) verarbeitete Variable (C1, C2) in dem zumindest einen Sicherheitselement (SE) vorgehalten ist, wobei die Ausführungsumgebung (SEE) dazu ausgebildet ist, für einen Zugriff auf die Variable (C1, C2) eine sichere Verbindung zwischen der den Zähler anfordernden Applikation (SApp1, SApp2) und dem Sicherheitselement (SE) aufzubauen.

13. Endgerät nach Anspruch 11 oder 12, **dadurch gekennzeichnet, dass** das Endgerät ein Mobilfunkgerät ist.

14. Endgerät nach einem der Ansprüche 11 bis 13, **dadurch gekennzeichnet, dass** das Sicherheitselement (SE) zur Verwaltung der Variablen (C1, C2) eine weitere Applikation (CA) umfasst, wobei die weitere Applikation (CA) und die eine oder die mehreren Applikationen (SApp1, SApp2) in einer kryptographischen Beziehung zueinander stehen.

15. Endgerät nach einem der Ansprüche 11 bis 14, **dadurch gekennzeichnet, dass** der oder den sicherheitsrelevanten Applikationen (SApp1, SApp2) zwecks Anforderung eines Zugriffs auf die Variable (C1, C2) eine Programmierschnittstelle (T-API) zugeordnet ist, die die sichere Verbindung zu dem Sicherheitselement (SE) herstellen kann.

## Claims

1. A method on a terminal (T) comprising at least one security element (SE) and a first secure execution environment for the execution of security-relevant applications (SApp1, SApp2) and a second insecure execution environment for the execution of non-security-relevant applications (App1, App2, App3), having the steps of:
executing a security-relevant application (SApp1, SApp2) in the secure execution environment, wherein the application (SApp1, SApp2) employs and stores in a non-volatile fashion a variable (C1, C2),
**characterized by**
employing a dedicated interface of the secure execution environment that is provided for security-relevant applications for swapping variables to the security element, in order to store the variable in the at least one security element (SE) through the security-relevant application (SApp1, SApp2), wherein the variable (C1, C2) is a variable for securing the security-relevant application (SApp1, SApp2).

2. The method according to claim 1, **characterized in that** by means of the variable (C1, C2) the loading of an old memory image with obsolete variable content is prevented.

3. The method according to any of the claims 1 to 2, **characterized in that** the variable (C1, C2) is stored in a dedicated swapping memory area of the security element.

4. The method according to any of the preceding claims, **characterized in that** the variable (C1, C2) processed by the security-relevant applications (SApp1, SApp2) is supplied in the at least one security element (SE), wherein for an access to the variable (C1, C2) a secure connection is set up between the application (SApp1, SApp2) requesting the variable (C1, C2) and the security element (SE).

5. The method according to any of the preceding claims, **characterized in that** for different security-relevant applications (SApp1, SApp2) different variables (C1, C2) are made available in the security element (SE).

6. The method according to claim 5, **characterized in that** for respective security-relevant applications (SApp1, SApp2) a separate variable (C1, C2) is made available in the security element (SE).

7. The method according to any of the preceding claims, **characterized in that** the variable (C1, C2) is administrated by a further application (CA) of the security element (SE), wherein the further application (CA) and the one or the several applications (SApp1, SApp2) are cryptographically interrelated.

8. The method according to any of the preceding claims, **characterized in that** the secure connection to the security element (SE) is established by a programming interface (T-API) associated with the security-relevant application or applications (SApp1, SApp2) for the purpose of requesting an access to the variable (C1, C2).

9. The method according to any of the claims 6 and 8, **characterized in that** the programming interface (T-API) establishes a respective secure connection with the security element (SE) for a respective security-relevant application (SApp1, SApp2).

10. The method according to claim 8 or 9, **characterized in that** the programming interface (T-API1, T-API2) is notified by the security element (SE) about the variable (C1, C2) present in the security element (SE).

11. A terminal (T) comprising at least one security element (SE) and a first secure execution environment for the execution of security-relevant applications (SApp1, SApp2) and a second insecure execution environment for the execution of non-security-relevant applications (App1, App2, App3), wherein the terminal (T) is configured to execute a security-relevant application (SApp1, SApp2) in the secure execution environment, wherein a variable can be stored in usable and non-volatile fashion by the application (SApp1, SApp2),
**characterized in that**
the terminal (T) is further configured to employ a dedicated interface of the secure execution environment provided for security-relevant applications for swapping variables to the security element, in order to store the variable in the at least one security element (SE) through the security-relevant application (SApp1, SApp2), wherein the variable (C1, C2) is a variable for securing the security-relevant application (SApp1, SApp2).

12. The terminal according to claim 11, **characterized in that** the variable (C1, C2) processed by the security-relevant applications (SApp1, SApp2) is supplied in the at least one security element (SE), wherein, for an access to the variable (C1, C2), the execution environment (SEE) is configured to set up a secure connection between the application (SApp1, SApp2) requesting the counter and the security element (SE).

13. The terminal according to claim 11 or 12, **characterized in that** the terminal is a mobile communication device.

14. The terminal according to any of the claims 11 to 13, **characterized in that** the security element (SE) for administrating the variables (C 1, C2) comprises a further application (CA), wherein the further application (CA) and the one or several applications (SApp1, SApp2) are cryptographically interrelated.

15. The terminal according to any of the claims 11 to 14, **characterized in that** a programming interface (T-API) which can establish the secure connection to the security element (SE) is associated with the security-relevant application or applications (SApp1, SApp2) for the purpose of requesting an access to the variable (C1, C2).

## Revendications

1. Procédé sur un terminal (T), qui comprend au moins un élément de sécurité (SE) et un premier environnement d'exécution sécurisé pour l'exécution d'applications relatives à la sécurité (SApp1, SApp2) et un deuxième environnement d'exécution non sécurisé pour l'exécution d'applications non relatives à la sécurité (App1, App2, App3), comportant les étapes:
exécution d'une application relative à la sécurité (SApp1, SApp2) dans l'environnement d'exécution sécurisé, l'application (SApp1, SApp2) utilisant et mémorisant de manière non volatile une variable (C1, C2),
**caractérisé par**
utilisation d'une interface dédiée de l'environnement d'exécution sécurisé qui est prévue pour des applications relatives à la sécurité pour transférer des variables sur l'élément de sécurité afin de mémoriser la variable par le biais de l'application relative à la sécurité (SApp1, SApp2) dans le au moins un élément de sécurité (SE), la variable (C1, C2) étant une variable destinée à la sécurisation de l'application relative à la sécurité (SApp1, SApp2).

2. Procédé selon la revendication 1, **caractérisé en ce que**, à l'aide des variables (C1, C2), l'introduction d'une vieille image mémoire avec un contenu de variable périmé est empêchée.

3. Procédé selon une des revendications de 1 à 2, **caractérisé en ce que** la variable (C1, C2) est mémorisée dans une zone de mémoire de transfert dédiée de l'élément de sécurité.

4. Procédé selon une des revendications précédentes, **caractérisé en ce que** la variable (C1, C2) traitée par les applications relatives à la sécurité (SApp1, SApp2) est retenue dans le au moins un élément de sécurité (SE), cependant que, pour un accès à la variable (C1, C2), une connexion sécurisée entre l'application (SApp1, SApp2) sollicitant la variable (C1, C2) et l'élément de sécurité (SE) est établie.

5. Procédé selon une des revendications précédentes, **caractérisé en ce que**, pour différentes applications relatives à la sécurité (SApp1, SApp2), différentes variables (C1, C2) sont mises à disposition dans l'élément de sécurité (SE).

6. Procédé selon la revendication 5, **caractérisé en ce que**, pour une application relative à la sécurité (SApp1, SApp2) respective, une propre variable (C1, C2) est mise à disposition dans l'élément de sécurité (SE).

7. Procédé selon une des revendications précédentes, **caractérisé en ce que** la variable (C1, C2) est gérée par une application (CA) supplémentaire de l'élément de sécurité (SE), l'application (CA) supplémentaire et la une ou les plusieurs applications (SApp1, SApp2) étant en relation cryptographique entre elles.

8. Procédé selon une des revendications précédentes, **caractérisé en ce que** la connexion sécurisée avec l'élément de sécurité (SE) est générée par une interface de programmation (T-API) qui est affectée à la ou aux applications relatives à la sécurité (SApp1, Sapp2) aux fins de la sollicitation d'un accès à la variable (C1, C2).

9. Procédé selon une des revendications 6 et 8, **caractérisé en ce que** l'interface de programmation (T-API) génère pour une application relative à la sécurité (SApp1, SApp2) respective une connexion sécurisée respective avec l'élément de sécurité (SE).

10. Procédé selon la revendication 8 ou 9, **caractérisé en ce que** l'interface de programmation (T-API1, T-API2) est avertie de la variable (C1, C2) présente dans l'élément de sécurité (SE) par l'élément de sécurité (SE).

11. Terminal (T) qui comprend au moins un élément de sécurité (SE) et un premier environnement d'exécution sécurisé pour l'exécution d'applications relatives à la sécurité (SApp1, SApp2) et un deuxième environnement d'exécution non sécurisé pour l'exécution d'applications non relatives à la sécurité (App1, App2, App3), le terminal (T) étant configuré pour exécuter une application relative à la sécurité (SApp1, Sapp2) dans l'environnement d'exécution sécurisé, cependant que, par l'application (SApp1, Sapp2), une variable peut être utilisée et mémorisée de manière non volatile,
**caractérisé en ce que**
le terminal (T) est en outre configuré pour utiliser une interface dédiée de l'environnement d'exécution sécurisé qui est prévue pour des applications relatives à la sécurité pour transférer des variables sur l'élément de sécurité afin de mémoriser la variable par le biais de l'application relative à la sécurité (SApp1, SApp2) dans le au moins un élément de sécurité (SE),
la variable (C1, C2) étant une variable destinée à la sécurisation de l'application relative à la sécurité (SApp1, Sapp2).

12. Terminal selon la revendication 11, **caractérisé en ce que** la variable (C1, C2) traitée par les applications relatives à la sécurité (SApp1, SApp2) est retenue dans le au moins un élément de sécurité (SE), l'environnement d'exécution (SEE) étant, pour un accès à la variable (C1, C2), configuré pour établir une connexion sécurisée entre l'application (SApp1, SApp2) sollicitant le compteur et l'élément de sécurité (SE).

13. Terminal selon la revendication 11 ou 12, **caractérisé en ce que** le terminal est un appareil de radiocommunication mobile.

14. Terminal selon une des revendications de 11 à 13, **caractérisé en ce que** l'élément de sécurité (SE), pour la gestion de la variable (C1, C2), comprend une application (CA) supplémentaire, l'application supplémentaire (CA) et la une ou les plusieurs applications (SApp1, SApp2) étant en relation cryptographique entre elles.

15. Terminal selon une des revendications de 11 à 14, **caractérisé en ce qu'**il est affecté à la ou les applications relatives à la sécurité (SApp1, Sapp2), aux fins de la sollicitation d'un accès à la variable (C1, C2), une interface de programmation (T-API) qui peut générer la connexion sécurisée avec l'élément de sécurité (SE).
